# EUROPEAN PATENT SPECIFICATION

(11) **EP 3 240 185 B1**
(45) Date of publication and mention of the grant of the patent: **26.05.2021**
(21) Application number: 16191357.9
(22) Date of filing: 29.09.2016
(51) Int. Cl.: H02P 25/18, H02P 6/08

(54) **MOTOR DRIVING CONTROL APPARATUS WITH WINDING CHANGEOVER SWITCH OF MOTOR, MOTOR, COMPRESSOR, AND METHOD OF CONTROLLING WINDING CHANGEOVER OF MOTOR**
MOTORANTRIEBSSTEUERUNGSVORRICHTUNG MIT WINDUNGSWECHSELSCHALTER DES MOTORS, MOTOR, VERDICHTER UND VERFAHREN ZUR STEUERUNG DES WINDUNGSWECHSELS DES MOTORS
APPAREIL DE COMMANDE D'ENTRAINEMENT DE MOTEUR DOTE D'UN INTERRUPTEUR DE COMMUTATION D'ENROULEMENT DE MOTEUR, MOTEUR, COMPRESSEUR ET PROCEDE DE COMMANDE DE COMMUTATION D'ENROULEMENT DE MOTEUR

(30) Priority: 15.12.2015 JP 2015244017
(43) Date of publication of application: 01.11.2017
(73) Proprietor: MITSUBISHI HEAVY INDUSTRIES, LTD., Tokyo 108-8215 (JP)
(72) Inventor: TAKADA, Junichi, Minato-ku, Tokyo 108-8215 (JP); KIMATA, Yoshiyuki, Minato-ku, Tokyo 108-8215 (JP); SATO, Hajime, Minato-ku, Tokyo 108-8215 (JP); TAKASU, Yogo, Minato-ku, Tokyo 108-8215 (JP); ISOBE, Shinichi, Minato-ku, Tokyo 108-8215 (JP); SHIMIZU, Kenji, Minato-ku, Tokyo 108-8215 (JP)
(74) Representative: Cabinet Beau de Loménie

(56) References cited:
- EP-A1- 1 439 633
- EP-A2- 2 639 946
- EP-A2- 2 763 309
- JP-A- 2008 022 665
- JP-A- 2008 178 207
- JP-A- 2013 121 222

## Description

### BACKGROUND OF THE INVENTION

### Field of the Invention

The present invention relates to a motor driving control apparatus with a switch that changes over a winding of a motor between different numbers of turns, to a motor and an electric compressor each including the motor driving control apparatus, and to a method of controlling winding changeover of the motor.

### Description of the Related Art

A permanent magnet synchronous motor that drives a compressor configuring an air conditioner and the like is driven by a driving control apparatus including an inverter section that supplies a drive current to the motor. The motor generates an induced voltage that is proportional to a product of the number of turns of a stator winding and a rotation speed. Therefore, so-called field-weakening control that suppresses the induced voltage is performed by a controller in high-speed operation in which the induced voltage is large.

Such field-weakening control makes it possible to suppress the induced voltage to increase the rotation speed; however, a current not contributing to output torque of the motor flows, which causes degradation in efficiency of the motor. Decreasing the number of turns makes it possible to reduce the induced voltage to be generated and loss of the torque caused by the field-weakening control; however, a current necessary for obtaining predetermined torque is increased in the low-speed operation, which causes degradation in efficiency of the motor in the low-speed operation.

To solve the above-described difficulties, changing over, with a switch, the winding between a small number of turns and a large number of turns is effective (Japanese Patent Laid-Open No. 2008-22665).

As the switch for changing over the winding, there are a mechanical switch mechanically changing over junctions (Japanese Patent Laid-Open No. 2008-22665), and a semiconductor switch using a semiconductor device such as an IGBT.

In the case of using a mechanical switch, it is necessary to consider transient property (occurrence of surge) at the time of switch changeover. In the case of using a semiconductor switch, conduction loss occurs due to resistance of a semiconductor device.

Therefore, in Japanese Patent Laid-Open No. 2008-182783, although a mechanical switch is basically used, a semiconductor switch is only turned on during a transient time (at the time of switch changeover) to cope with the transient property.

When the mechanical switch is used together with the semiconductor switch as with Japanese Patent Laid-Open No. 2008-182783, the number of switches is increased to cause upsizing of a controller, and a system becomes complicated in order to operate these switches in cooperation. Thus, the cost is drastically increased.

In addition, securement of durability and reliability taking into consideration abrasion of a junction is desirable as long as the mechanical switch having a mechanical junction is used.

Therefore, it is an object of the present invention to provide a driving control apparatus for a winding changeover motor that makes it possible to suppress efficiency degradation and cost of the motor while securing durability and reliability

Japanese Patent Application Laid-Open No. 2008-178207 describes a motor control apparatus with a winding switching section and discloses the features in the preamble of claim 1.

### SUMMARY OF THE INVENTION

The present invention is defined in the independent claims with preferred embodiments disclosed in the dependent claims.

One or more of the plurality of semiconductor switches in the present invention each may be an inexpensive semiconductor device that is typically used as a power semiconductor device. In addition, a device that is expensive but has small conduction loss at a small current as compared with the semiconductor device is used as the other semiconductor switches.

This makes it possible to suppress conduction loss that is inevitably accompanied with the semiconductor switch while minimizing increase in cost, and expansion of an operation range and securement of motor efficiency brought about by virtue of the field-weakening control and the winding changeover are achieved without being reduced by the conduction loss of the semiconductor switch.

Also, in the present invention, the winding changeover is achieved only by the semiconductor switches without using a mechanical switch, which provides excellent transient property, long lifetime, and sufficient durability and reliability.

### BRIEF DESCRIPTION OF THE DRAWINGS

FIG. 1 is a diagram illustrating a driving control apparatus for a winding changeover motor according to an embodiment of the present invention;
FIG. 2A is a diagram illustrating a configuration of a first semiconductor switch, and FIG. 2B is a diagram illustrating a configuration of a second semiconductor switch;
FIG. 3 is a graph illustrating current-conduction loss characteristics of the first semiconductor switch and the second semiconductor switch;
FIG. 4A is a diagram illustrating another configuration of the first semiconductor switch, and FIG. 4B is a diagram illustrating another configuration of the second semiconductor switch;
FIGS. 5A and 5B are schematic diagrams each illustrating a control example in which a winding is changed over between a large number of turns and a small number of turns depending on a rotation speed of the motor;
FIG. 6 is a schematic diagram illustrating an electric compressor including the drive control apparatus illustrated in FIG. 1; and
FIG. 7 is a graph illustrating current-conduction loss characteristics of the first semiconductor switch, the second semiconductor switch, and a third semiconductor switch.

### DETAILED DESCRIPTION OF THE PREFERRED EMBODIMENTS

Hereinafter, some embodiments of the present invention are described with reference to accompanying drawings.

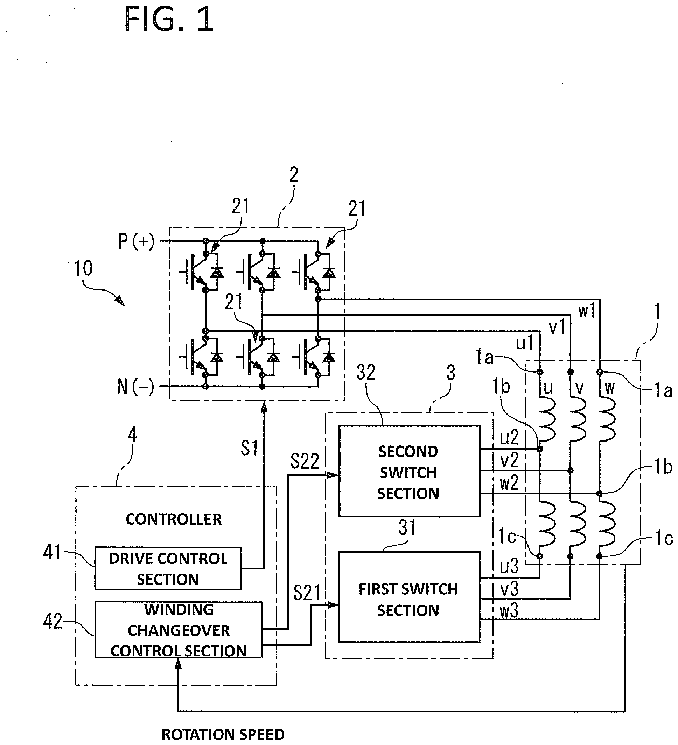

A motor driving control apparatus 10 illustrated in FIG. 1 includes: an inverter section 2 supplying a drive current to a motor 1; a winding changeover section 3 changing over the windings u, v, and w provided in the motor 1 between a small number of turns and a large number of turns; and a controller 4 providing a control signal (instruction) to each of the inverter section 2 and the winding changeover section 3.

The motor 1 is a permanent magnet synchronous motor that includes a rotor having a permanent magnet, and a stator provided with the windings u, v, and w.

The permanent magnet synchronous motor generates an induced voltage that is proportional to a product of the number of turns and the rotation speed, through electromagnetic induction accompanied with rotation of the rotor provided with the permanent magnet. Therefore, in high-speed operation in which the induced voltage is large, equivalent field-weakening control is performed through demagnetization action caused by a negative d-axis current flowing through the windings u, v, and w. The control is performed by the controller 4.

Terminals 1a, and 1c are provided at ends of the winding u, and a terminal 1b is provided at an intermediate position therebetween. The intermediate terminal 1b is provided at a position of the predetermined number of turns from the end of the winding u.

The predetermined number of turns from the terminal 1a to the intermediate terminal 1b is referred to as "the small number of turns".

The number of turns from the terminal 1a to the terminal 1c is referred to as "the large number of turns". "The large number of turns" indicates the number of turns over an entire length of the winding u.

Selecting the terminal 1b or 1c defines the number of turns of the winding u.

The terminals 1a, 1b, and 1c are also provided in each of the windings v, and w, similarly to the winding u.

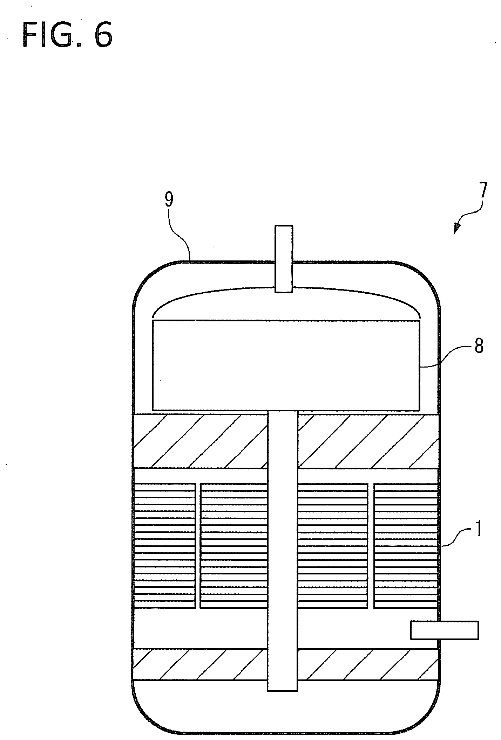

The motor 1 is applicable to a compressor 7 illustrated in FIG. 6. The compressor 7 includes the motor 1, a compression mechanism 8 that is driven by the motor 1 to compress a refrigerant, and a housing 9 that houses the motor 1 and the compression mechanism 8, and configures an air conditioner.

The inverter section 2 includes semiconductor switching devices 21 respectively corresponding to u-phase, v-phase, and w-phase. A DC power supply (not illustrated) including a rectifier circuit is connected between a positive input terminal P (+) and a negative input terminal N (-) of the inverter section 2.

The inverter section 2 supplies the drive current that is generated through switching of the semiconductor switching devices 21, to the windings u, v, and w, respectively through feeders u1, v1, and w1.

The winding changeover section 3 includes a first switch section 31 and a second switch section 32.

The first switch section 31 is connected to the terminal 1c located at one end of each of the windings u, v, and w through respective lead wires u3, v3, and w3.

The second switch section 32 is connected to the terminal 1b located at the intermediate position of each of the windings u, v, and w through respective lead wires u2, v2, and w2.

The first switch section 31 and the second switch section 32 each are exclusively switched on or off, thereby selecting one of the terminals 1b and 1c of each of the windings u, v, and w.

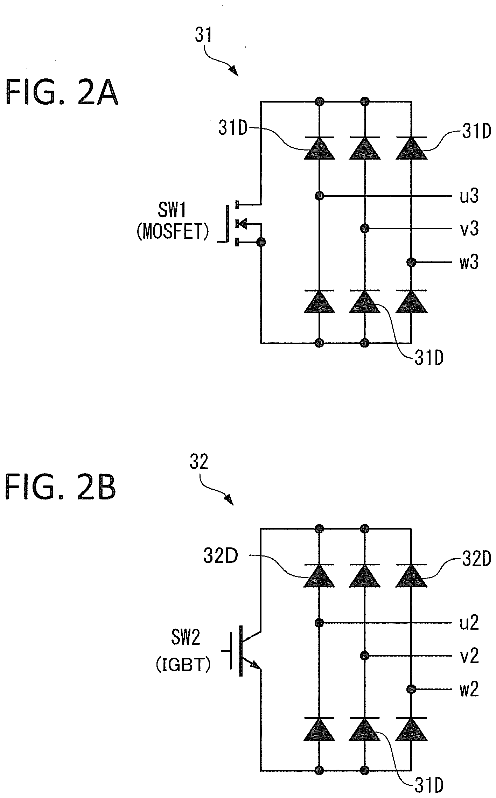

As illustrated in FIG. 2A, the first switch section 31 includes a semiconductor switch SW1 and diodes 31D. The diodes 31D rectify currents flowing through the corresponding lead wires u3, v3, and w3 led out from the respective terminals 1c of the windings u, v, and w.

As illustrated in FIG. 2B, the second switch section 32 includes a semiconductor switch SW2 and diodes 32D. The diodes 32D rectify currents flowing through the corresponding lead wires u2, v2, and w2 led out from the respective terminals 1b of the windings u, v, and w.

The first switch section 31 and the second switch section 32 each configure a DC power supply.

The first switch section 31 and the second switch section 32 each collectively changeover the windings u, v, and w between the large number of turns and the small number of turns.

The configurations of the first switch section 31 and the second switch section 32 respectively illustrated in FIGS. 2A and 2B are merely examples.

The semiconductor switch SW1 is different in conduction loss characteristics with respect to the current from the semiconductor switch SW2.

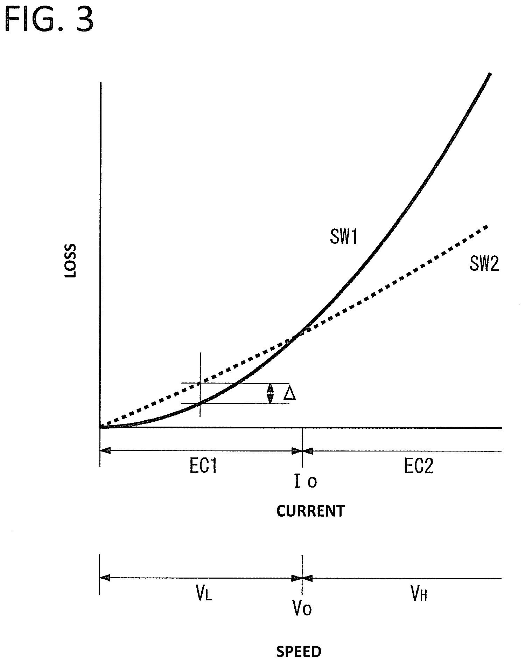

FIG. 3 illustrates the conduction loss characteristics of the semiconductor switch SW1 (illustrated by a solid line), and the conduction loss characteristics of the semiconductor switch SW2 (illustrated by a dashed line). The conduction loss of the semiconductor switch SW1 is substantially proportional to the square of the current. The characteristics of the semiconductor switches SW1 and SW2 illustrated in FIG. 3 are merely examples.

Characteristic curves of the respective semiconductor switches SW1 and SW2 intersect with each other at a certain current I₀. The conduction loss of the semiconductor switch SW1 is smaller than the conduction loss of the semiconductor switch SW2 in a region EC1 in which the current is smaller than the current I₀. In contrast, the conduction loss of the semiconductor switch SW2 is smaller than the conduction loss of the semiconductor switch SW1 in a region EC2 in which the current is larger than the current I₀.

The semiconductor switch SW1 is a metal-oxide-semiconductor field-effect transistor (MOSFET) in this example.

The semiconductor switch SW2 is an insulated gate bipolar transistor (IGBT) in this example.

As the MOSFET, in addition to a typical MOSFET using Si, a MOSFET having a super junction structure (SJ-MOSFET) using Si, and a wide gap MOSFET using SiC, GaN, Ga₂O₃, or the like may be used.

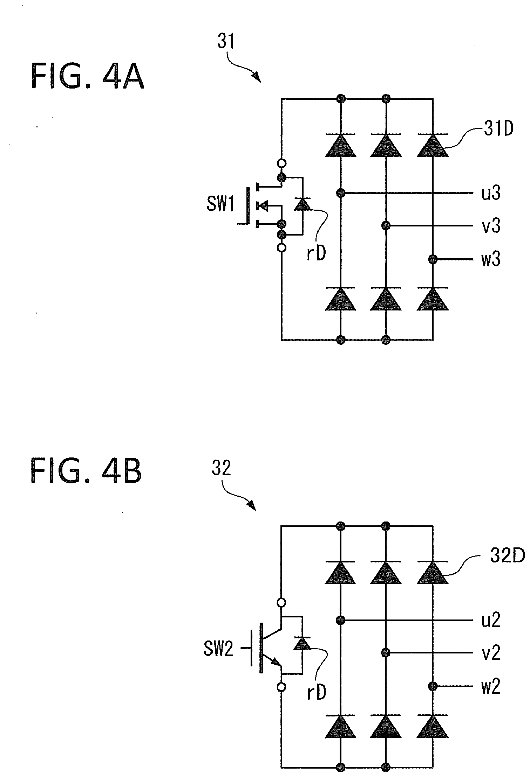

As illustrated in FIGS. 4A and 4B, the semiconductor switches SW1 and SW2 each may include a flyback diode rD. Appropriate electronic components configuring the first switch section 31 and the second switch section 32 may be selected in consideration of availability and characteristics.

The flyback diode rD in each of the first switch section 31 and the second switch section 32 does not function. Thus, even if the flyback diode rD is provided, the flyback diode rD does not affect action of the semiconductor switches SW1 and SW2.

The controller 4 (FIG. 1) includes a drive control section 41 that supplies a drive signal S1 to the inverter section 2, and a winding changeover control section 42 that supplies winding changeover signals S21 and S22 respectively to the first switch section 31 and the second switch section 32 of the winding changeover section 3.

The drive control section 41 modulates a width of a pulse wave under pulse width modulation (PWM) control to generate the drive signal S1, and supplies the drive signal S1 to the inverter section 2. The semiconductor switching devices 21 of the inverter section 2 are switched on and off in response to the drive signal S1 that is a pulse signal. This generates a drive current of a waveform corresponding to a duty ratio of the drive signal S1, and the generated drive current is supplied to each of the windings u, v, and w. The motor 1 is rotated at a variable speed according to the duty ratio of the drive signal S1.

The winding changeover control section 42 supplies the winding changeover signals S21 and S21 respectively to the semiconductor switch SW1 and the semiconductor switch SW2. The winding changeover signals S21 and S22 respectively selectively turn on and off the first switch section 31 and the second switch section 32.

When the winding changeover signal S21 is ON and the winding changeover signal S22 is OFF, the semiconductor switch SW1 (FIG. 2A) of the first switch section 31 is turned on and the semiconductor switch SW2 (FIG. 2B) of the second switch section 32 is turned off. At this time, the windings u, v, and w are changed over to the large number of turns.

When the winding changeover signal S21 is OFF and the winding changeover signal S22 is ON, the semiconductor switch SW1 (FIG. 2A) of the first switch section 31 is turned off and the semiconductor switch SW2 (FIG. 2B) of the second switch section 32 is turned on. At this time, the windings u, v, and w are changed over to the small number of turns.

Next, an example of control of changing over the windings u, v, and w between the large number of turns and the small number of turns by the winding changeover control section 42 and the winding changeover section 3 is described.

In this case, the changeover of the windings u, v, and w is performed according to the rotation speed of the motor 1.

The winding changeover motor 1 applied to the compressor 7 for an air conditioner has the following characteristics.
- When the windings u, v, and w are changed over to the large number of turns during low-speed operation of the compressor 7, a current enabling the motor 1 to acquire predetermined torque is small.
- When the windings u, v, and w are changed over to the small number of turns during high-speed operation of the compressor 7, the current enabling the motor 1 to acquire the predetermined torque is large.

A speed region is so provided to each of the semiconductor switches SW1 and SW2 as to improve efficiency of the motor 1 in consideration of the above-described characteristics and the current-conduction loss characteristics illustrated in FIG. 3. More specifically, as illustrated in FIG. 3, a low-speed region V_{L} corresponding to a small current is provided to the semiconductor switch SW1 in which efficiency is high (loss is small) at a relatively small current out of the semiconductor switches SW1 and SW2, whereas a high-speed region V_{H} corresponding to a large current is provided to the semiconductor switch SW2 in which efficiency is high (loss is small) at a relatively large current.

The semiconductor switch SW1 is turned on in the provided low-speed region V_{L}, and at the same time, the semiconductor switch SW2 is turned off.

The semiconductor switch SW2 is turned on in the provided high-speed region V_{H}, and at the same time, the semiconductor switch SW1 is turned off.

The speed regions V_{L} and V_{H} may be defined depending on a threshold speed V₀.

In FIG. 3, the speed region V_{L} and the speed region V_{H} are sectionalized based on the speed V₀ corresponding to the current I₀ at which the conduction loss characteristics of the semiconductor switches SW1 and SW2 intersect with each other; however, the speed regions are not limited thereto. The speed V₀ may be appropriately defined in consideration of working temperature, operation conditions, and any other conditions, through analysis and examination.

Also, ambient temperature of the semiconductor switches SW1 and SW2 may be detected, and the threshold speed V₀ may be corrected based on the detected temperature.

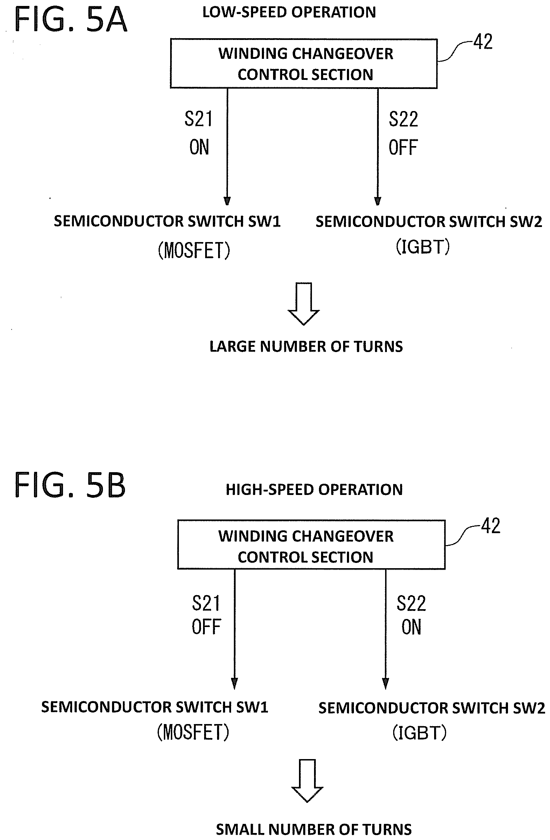

An example of the control in the low-speed operation and the high-speed operation is described with reference to FIGS. 5A and 5B.

The winding changeover control section 42 supplies the winding changeover signals S21 and S21 each indicating the large number of turns or the small number of turns, respectively to the semiconductor switches SW1 and SW2, depending on the speed region matched to the detected rotation speed of the motor 1.

The winding changeover control section 42 may refer to the rotation speed used in feedback control by the drive control section 41.

As illustrated in FIG. 5A, the semiconductor switch SW1 is turned on in response to the winding changeover signal S21 supplied from the winding changeover control section 42, and the semiconductor switch SW2 is turned off in response to the winding changeover signal S22 during the low-speed operation (in the low-speed region V_{L}). This changes over the windings u, v, and w to the large number of turns. At this time, the current flowing through the windings u, v, and w is small because of the above-described characteristics of the motor 1. Thus, the current flowing through the semiconductor switch SW1 connected to the terminal 1c of each of the windings u, v, and w is also small. When the current is small, the conduction loss of the semiconductor switch SW1 is smaller than that of the semiconductor switch SW2 because of the characteristics illustrated in FIG. 3.

In other words, out of the semiconductor switches SW1 and SW2 different in conduction loss characteristics from each other, the semiconductor switch SW1 whose efficiency is high in the low-speed operation with a small current is selected. Therefore, as compared with a case where the conduction loss characteristics of the semiconductor switches SW1 and SW2 are the same as each other, the efficiency of the motor 1 is higher by an amount of loss difference Δ (FIG. 3) between the semiconductor switches SW1 and SW2.

As illustrated in FIG. 5B, the semiconductor switch SW1 is turned off in response to the winding changeover signal S21 supplied from the winding changeover control section 42, and the semiconductor switch SW2 is turned on in response to the winding changeover signal S22 during the high-speed operation (in the high-speed region V_{H}). This changes over the windings u, v, and w to the small number of turns. At this time, the current flowing through the windings u, v, and w is large because of the above-described characteristics of the motor 1. Thus, the current flowing through the semiconductor switch SW2 connected to the terminal 1b of each of the windings u, v, and w is also large. When the current is large, the conduction loss of the semiconductor switch SW2 is smaller than that of the semiconductor switch SW1 because of the characteristics illustrated in FIG. 3.

In other words, out of the semiconductor switches SW1 and SW2, the semiconductor switch SW2 higher in efficiency is selected in the high-speed operation.

According to the present embodiment mentioned above, the winding changeover is realized only by the semiconductor switches SW1 and SW2 without using a mechanical switch having a mechanical junction. Therefore, unlike a case of using a mechanical switch, an excessive current does not occur in the switch changeover, and the switches are changed over at higher speed than that of the mechanical switch. Thus, this is superior in transient property. Also, the semiconductor switches SW1 and SW2 are less deteriorated with time as compared with the mechanical switch, the junction of which is gradually worn away. Thus, the semiconductor switches SW1 and SW2 make it possible to provide long life and to sufficiently secure durability and reliability.

If the semiconductor switch and a mechanical switch formed of a good conductor are used in combination and the semiconductor switch is turned on only in the switch changeover, it is possible to cope with the transient property but it is necessary to consider abrasion of the junction of the mechanical switch. In addition, the system becomes complicated to cause significant increase in cost.

In contrast, in the present embodiment, the IGBT that is typically used as a power semiconductor device and the MOSFET that is more expensive than the IGBT but has small conduction loss at the small current are used for the semiconductor switches SW1 and SW2. This suppresses the conduction loss that is inevitably accompanied with the semiconductor switch while minimizing increase in cost. Therefore, expansion of an operation range and securement of motor efficiency brought about by virtue of the field-weakening control and the winding changeover in the permanent magnet synchronous motor 1 are achieved without being reduced by the conduction loss of the semiconductor switch.

In addition, using the semiconductor switches SW1 and SW2 different in the current-conduction loss characteristics from each other is meaningful in the motor 1 to be applied to the compressor for an air conditioner, in terms of annual energy consumption (APF) that is an evaluation index for an air conditioner complying with JIS C9612. This is because the APF indicates a ratio of a total sum of heat quantity removed from room air and heat quantity provided to the room air during a predetermined cooling period and a predetermined warming period versus a total sum of electric power consumed during the same periods, and is calculated by weighting the operation in the low-speed region in which operation frequency is high. In other words, it is significant that a device having favorable conduction loss characteristics is used, as one of the semiconductor switches SW1 and SW2 necessary for the winding changeover, with slight expense to secure operation efficiency.

In addition to those mentioned above, the configuration described in the above-described embodiment may be selected or appropriately modified without departing from the scope of protection, which is defined in the appended claims.

In the present invention, three or more semiconductor switches may be used.

For example, when the windings u, v, and w of the motor are configured to be switchable to three levels of the number of turns (small number of turns, middle number of turns, and large number of turns), three semiconductor switches respectively corresponding to the terminals of the small number of turns, the middle number of turns, and the large number of turns may be preferably used.

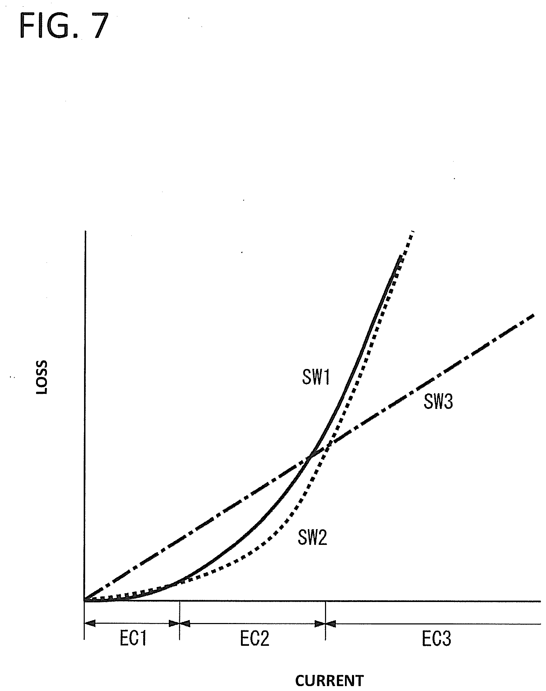

FIG. 7 illustrates current-conduction loss characteristics of three semiconductor switches SW1, SW2, and SW3. The characteristics of the semiconductor switches SW1, SW2, and SW3 are illustrated by a solid line, a dashed line, and an alternate long and short dash line, respectively.

In this case, in the current region EC1, the semiconductor switch SW1 is turned on, and the other semiconductor switches SW2 and SW3 are turned off. In the current region EC2, the semiconductor switch SW2 is turned on, and the other semiconductor switches SW1 and SW3 are turned off. Also, in the current region EC3, the semiconductor switch SW3 is turned on, and the other semiconductor switches SW1 and SW2 are turned off.

Thus, the semiconductor switch that has the smallest conduction loss with respect to the current is selected based on the characteristics illustrated in FIG. 7.

As the plurality of semiconductor switches in the present invention, switches each having an optional structure may be used as long as the switches are different in current-conduction loss characteristics from one another and the switch having the smallest conduction loss among the switches is selected depending on the current.

In addition, the present invention is applicable to a motor in which a single-phase alternating current is supplied as the drive current to the windings.

## Claims

1. A motor driving control apparatus (10), comprising:
an inverter section (2) configured to supply a drive current to a winding (u, v, w) provided in a motor (1);
a winding changeover section (3) configured to select one of a plurality of terminals (1b, 1c) each defining a number of turns of the winding (u, v, w) to change over the winding between two or more different numbers of turns; and
a control section (4) configured to provide an instruction corresponding to one of the numbers of turns to the winding changeover section (3), wherein
the winding changeover section (3) including a plurality of semiconductor switches (SW2, SW1) that are connected to the corresponding terminals (1b, 1c) and
the plurality of semiconductor switches (SW1, SW2) being selectively turned on or off in response to the instruction,
the winding (u, v, w) including terminals (1a, 1c) respectively provided at ends thereof, and at least one terminal (1b) at an intermediate position between the terminals (1a, 1c), and
the inverter section (2) being connected to one (1a) of the terminals provided at one of the ends of the winding (u, v, w), and the semiconductor switches (SW2, SW1) of the winding changeover section (3) being connected to the other one (1c) of the terminals provided at the other one of the ends of the winding (u, v, w) and to the at least one terminal (1b) located at the intermediate position of the winding (u, v, w),
**characterised in that**
the plurality of semiconductor switches (SW2, SW1) are different in characteristics indicating conduction loss with respect to the current from one other and **in that** the semiconductor switch having the smallest conduction loss with respect to the current is turned on, and the other semiconductor switches are turned off, in response to the instruction.

2. The motor driving control apparatus according to claim 1, wherein the winding changeover section (3) includes a MOSFET and an IGBT as the plurality of semiconductor switches.

3. The motor driving control apparatus according to any one of claims 1 or 2, wherein the semiconductor switches (SW1, SW2) are each provided with a flyback diode (rD).

4. A motor (1) comprising the motor driving control apparatus (10) according to any one of claims 1 to 3.

5. A compressor (7) comprising:
the motor (1) according to claim 4;
a compression mechanism (8) configured to be driven by the motor to compress a fluid; and
a housing (9) that houses the motor and the compression mechanism.

6. The compressor according to claim 5, wherein the compressor configures an air conditioner.

7. A method of controlling winding changeover of a motor, the motor being provided with a winding that is switchable between two or more numbers of turns, the method comprising:
connecting a plurality of semiconductor switches to a plurality of terminals of the winding, the terminals each defining the number of turns of the winding; and
selectively turning on or off the plurality of semiconductor switches to change over the winding between the different numbers of turns,
the winding (u, v, w) including terminals (1a, 1c) respectively provided at ends thereof, and at least one terminal (1b) at an intermediate position between the terminals (1a, 1c), and
the inverter section (2) being connected to one (1a) of the terminals provided at one of the ends of the winding (u, v, w), and the semiconductor switches (SW2, SW1) of the winding changeover section (3) being connected to the other one (1c) of the terminals provided at the other one of the ends of the winding (u, v, w) and to the at least one terminal (1b) located at the intermediate position of the winding (u, v, w),
**characterised in that**
the plurality of semiconductor switches (SW2, SW1) are different in characteristics indicating conduction loss with respect to the current from one other and **in that** the semiconductor switch having the smallest conduction loss with respect to the current is turned on, and the other semiconductor switches are turned off.

8. The method of controlling winding changeover of the motor according to claim 7, wherein the semiconductor switch that is provided with a speed region matched to a detected rotation speed of the motor is turned on, and the other semiconductor switches are turned off.

9. The method of controlling winding changeover of the motor according to claim 8, wherein the speed region is sectionalized based on a threshold speed corresponding to a current at which the characteristics indicating conduction loss of the semiconductor switches intersect with each other.

10. The method of controlling winding changeover of the motor according to claim 8 or 9, wherein the speed region is sectionalized based on a threshold speed, and the threshold speed is corrected based on a detected ambient temperature of the semiconductor switches.

## Patentansprüche

1. Motorantriebssteuervorrichtung (10), die Folgendes umfasst:
einen Stromrichterbereich (2), der dazu ausgelegt ist, einer Wicklung (u, v, w), die in einem Motor (1) bereitgestellt ist, einen Antriebsstrom zuzuführen;
einen Wicklungsumschaltbereich (3), der dazu ausgelegt ist, eine von einer Vielzahl von Klemmen (1b, 1c) auszuwählen, von denen jede eine Anzahl von Windungen der Wicklung (u, v, w) definiert, um die Wicklung zwischen zwei oder mehr verschiedenen Anzahlen von Windungen umzuschalten; und
einen Steuerbereich (4), der dazu ausgelegt ist, dem Wicklungsumschaltbereich (3) eine Anweisung bereitzustellen, die einer der Anzahlen von Windungen entspricht, wobei
der Wicklungsumschaltbereich (3) eine Vielzahl von Halbleiterschaltern (SW2, SW1) beinhaltet, die mit den entsprechenden Klemmen (1b, 1c) verbunden sind, und
die Vielzahl von Halbleiterschaltern (SW1, SW2) in Reaktion auf die Anweisung selektiv ein- oder ausgeschaltet werden,
die Wicklung (u, v, w) Klemmen (1a, 1c), die jeweils an Enden davon bereitgestellt sind, und mindestens eine Klemme (1b) in einer Zwischenposition zwischen den Klemmen (1a, 1c) beinhaltet, und
der Stromrichterbereich (2) mit einer (1a) der Klemmen, die an einem der Enden der Wicklung (u, v, w) bereitgestellt ist, verbunden ist und die Halbleiterschalter (SW2, SW1) des Wicklungsumschaltbereichs (3) mit der anderen (1c) der Klemmen, die am anderen der Enden der Wicklung (u, v, w) bereitgestellt ist, sowie mit der mindestens einen Klemme (1b), die sich in der Zwischenposition der Wicklung (u, v, w) befindet, verbunden ist,
**dadurch gekennzeichnet, dass**
sich die Vielzahl von Halbleiterschaltern (SW2, SW1) hinsichtlich von Eigenschaften, die einen Leitungsverlust mit Bezug auf den Strom anzeigen, voneinander unterscheiden und dadurch, dass
der Halbleiterschalter mit dem kleinsten Leitungsverlust mit Bezug auf den Strom in Reaktion auf die Anweisung eingeschaltet wird und die anderen Halbleiterschalter ausgeschaltet werden.

2. Motorantriebssteuervorrichtung nach Anspruch 1, wobei der Wicklungsumschaltbereich (3) einen MOSFET und einen IGBT als die Vielzahl von Halbleiterschaltern beinhalten.

3. Motorantriebssteuervorrichtung nach einem der Ansprüche 1 oder 2, wobei die Halbleiterschalter (SW2, SW1) jeweils mit einer Rücklaufdiode (rD) versehen sind.

4. Motor (1), der die Motorantriebssteuervorrichtung (10) nach einem der Ansprüche 1 bis 3 umfasst.

5. Verdichter (7), der Folgendes umfasst:
den Motor (1) nach Anspruch 4;
einen Verdichtungsmechanismus (8), der dazu ausgelegt ist, vom Motor angetrieben zu werden, um ein Fluid zu verdichten; und
ein Gehäuse (9), das den Motor und den Verdichtungsmechanismus umschließt.

6. Verdichter nach Anspruch 5, wobei der Verdichter eine Klimaanlage ausgelegt.

7. Verfahren zum Steuern einer Wicklungsumschaltung eines Motors, wobei der Motor mit einer Wicklung versehen ist, die zwischen zwei oder mehr Anzahlen von Windungen umschaltbar ist, wobei das Verfahren Folgendes umfasst:
Verbinden einer Vielzahl von Halbleiterschaltern mit einer Vielzahl von Klemmen der Wicklung, wobei die Klemmen jeweils die Anzahl von Windungen der Wicklung definieren; und
selektives Ein- oder Ausschalten der Vielzahl von Halbleiterschaltern, um die Wicklung zwischen den verschiedenen Anzahlen von Windungen umzuschalten,
wobei die Wicklung (u, v, w) Klemmen (1a, 1c), die jeweils an Enden davon bereitgestellt sind, und mindestens eine Klemme (1b) in einer Zwischenposition zwischen den Klemmen (1a, 1c) beinhaltet, und
wobei der Stromrichterbereich (2) mit einer (1a) der Klemmen, die an einem der Enden der Wicklung (u, v, w) bereitgestellt ist, verbunden ist und die Halbleiterschalter (SW2, SW1) des Wicklungsumschaltbereichs (3) mit der anderen (1c) der Klemmen, die am anderen der Enden der Wicklung (u, v, w) bereitgestellt ist, sowie mit der mindestens einen Klemme (1b), die sich in der Zwischenposition der Wicklung (u, v, w) befindet, verbunden ist,
**dadurch gekennzeichnet, dass**
sich die Vielzahl von Halbleiterschaltern (SW2, SW1) hinsichtlich von Eigenschaften, die einen Leitungsverlust mit Bezug auf den Strom anzeigen, voneinander unterscheiden und dadurch, dass
der Halbleiterschalter mit dem kleinsten Leitungsverlust mit Bezug auf den Strom eingeschaltet wird und die anderen Halbleiterschalter ausgeschaltet werden.

8. Verfahren zum Steuern einer Wicklungsumschaltung des Motors nach Anspruch 7, wobei der Halbleiterschalter, der mit einer Drehzahlregion versehen ist, die auf eine detektierte Drehzahl des Motors abgestimmt ist, eingeschaltet wird und die anderen Halbleiterschalter ausgeschaltet werden.

9. Verfahren zum Steuern einer Wicklungsumschaltung des Motors nach Anspruch 8, wobei die Drehzahlregion auf Basis eines Drehzahlschwellwerts, der einem Strom entspricht, bei dem die Eigenschaften, die einen Leitungsverlust der Halbleiterschalter anzeigen, einander überschneiden, unterteilt ist.

10. Verfahren zum Steuern einer Wicklungsumschaltung des Motors nach Anspruch 8 oder 9, wobei die Drehzahlregion auf Basis eines Drehzahlschwellwerts unterteilt ist und der Drehzahlschwellwert auf Basis einer detektierten Umgebungstemperatur der Halbleiterschalter korrigiert wird.

## Revendications

1. Appareil de commande d'entraînement de moteur (10), comprenant :
une section d'onduleur (2) configurée pour fournir un courant d'entraînement à un enroulement (u, v, w) prévu dans un moteur (1) ;
une section de changement d'enroulement (3) configurée pour sélectionner l'une d'une pluralité de bornes (1b, 1c) définissant chacune un nombre de tours de l'enroulement (u, v, w) pour changer l'enroulement entre deux nombres de tours différents ou plus ; et
une section de commande (4) configurée pour fournir une instruction correspondant à l'un des nombres de tours à la section de changement d'enroulement (3), dans lequel
la section de changement d'enroulement (3) comporte une pluralité de commutateurs à semi-conducteurs (SW2, SW1) qui sont connectés aux bornes (1b, 1c) correspondantes et
la pluralité de commutateurs à semi-conducteurs (SW1, SW2) sont sélectivement allumés ou éteints en réponse à l'instruction,
l'enroulement (u, v, w) comporte des bornes (la, 1c) prévues respectivement à ses extrémités, et au moins une borne (1b) à une position intermédiaire entre les bornes (la, 1c), et
la section d'onduleur (2) est connectée à l'une (1a) des bornes prévues à l'une des extrémités de l'enroulement (u, v, w), et les commutateurs à semi-conducteurs (SW2, SW1) de la section de changement d'enroulement (3) sont connectés à l'autre (1c) des bornes prévues à l'autre des extrémités de l'enroulement (u, v, w) et à la au moins une borne (1b) située à la position intermédiaire de l'enroulement (u, v, w),
**caractérisé en ce que**
la pluralité de commutateurs à semi-conducteurs (SW2, SW1) présentent, de l'un à l'autre, des caractéristiques différentes indiquant une perte de conduction par rapport au courant, et **en ce que**
l'interrupteur à semi-conducteurs ayant la plus faible perte de conduction par rapport au courant est allumé, et les autres commutateurs à semi-conducteurs sont éteints, en réponse à l'instruction.

2. Appareil de commande d'entraînement de moteur selon la revendication 1, dans lequel la section de changement d'enroulement (3) comprend un MOSFET et un IGBT comme pluralité de commutateurs à semi-conducteurs.

3. Appareil de commande d'entraînement de moteur selon l'une quelconque des revendications 1 ou 2, dans lequel les commutateurs à semi-conducteurs (SW1, SW2) sont chacun pourvus d'une diode de tension de retour (rD).

4. Moteur (1) comprenant l'appareil de commande d'entraînement de moteur (10) selon l'une quelconque des revendications 1 à 3.

5. Compresseur (7) comprenant :
le moteur (1) selon la revendication 4 ;
un mécanisme de compression (8) configuré pour être entraîné par le moteur afin de comprimer un fluide ; et
un logement (9) qui loge le moteur et le mécanisme de compression.

6. Compresseur selon la revendication 5, dans lequel le compresseur configure un climatiseur.

7. Procédé de commande de changement d'enroulement d'un moteur, le moteur étant pourvu d'un enroulement qui peut être commuté entre deux nombres de tours ou plus, le procédé comprenant :
la connexion d'une pluralité de commutateurs à semi-conducteurs à une pluralité de bornes de l'enroulement, les bornes définissant chacune le nombre de tours de l'enroulement ; et
l'allumage ou l'extinction sélectifs de la pluralité de commutateurs à semi-conducteurs pour changer l'enroulement entre les nombres de tours différents,
l'enroulement (u, v, w) comportant des bornes (la, 1c) prévues respectivement à ses extrémités, et au moins une borne (1b) à une position intermédiaire entre les bornes (la, 1c), et
la section d'onduleur (2) étant connectée à l'une (1a) des bornes prévues à l'une des extrémités de l'enroulement (u, v, w), et les commutateurs à semi-conducteurs (SW2, SW1) de la section de changement d'enroulement (3) étant connectés à l'autre (1c) des bornes prévues à l'autre des extrémités de l'enroulement (u, v, w) et à la au moins une borne (1b) située à la position intermédiaire de l'enroulement (u, v, w),
**caractérisé en ce que**
la pluralité de commutateurs à semi-conducteurs (SW2, SW1) présentent, de l'un à l'autre, des caractéristiques différentes indiquant une perte de conduction par rapport au courant, et **en ce que**
l'interrupteur à semi-conducteurs ayant la plus faible perte de conduction par rapport au courant est allumé, et les autres commutateurs à semi-conducteurs sont éteints.

8. Procédé de commande de changement d'enroulement du moteur selon la revendication 7, dans lequel l'interrupteur à semi-conducteurs qui est pourvu d'une région de vitesse adaptée à une vitesse de rotation détectée du moteur est allumé, et les autres commutateurs à semi-conducteurs sont éteints.

9. Procédé de commande de changement d'enroulement du moteur selon la revendication 8, dans lequel la région de vitesse est sectionnée sur la base d'une vitesse seuil correspondant à un courant auquel les caractéristiques indiquant une perte de conduction des commutateurs à semi-conducteurs se croisent.

10. Procédé de commande de changement d'enroulement du moteur selon la revendication 8 ou 9, dans lequel la région de vitesse est sectionnée sur la base d'une vitesse seuil, et la vitesse seuil est corrigée sur la base d'une température ambiante détectée des commutateurs à semi-conducteurs.
